# EUROPEAN PATENT APPLICATION

(11) **EP 4 621 467 A2**
(43) Date of publication of application: **24.09.2025**
(21) Application number: 25164810.1
(22) Date of filing: 19.03.2025
(51) Int. Cl.: G02B 13/14, G01J 3/28, G01J 3/45, G02B 17/06, G02B 21/04, G02B 21/08, G01N 21/00, G02B 21/18, G02B 21/36, G02B 27/58

(54) **INFRARED MICROSCOPE**

(30) Priority: 22.03.2024 JP 2024047168
(71) Applicant: JASCO Corporation, Hachioji-shi Tokyo 192-8537 (JP); Keio University, Tokyo, 108-8345 (JP)
(72) Inventor: Koshoubu, Jun, Tokyo, 192-8537 (JP); Shimizu, Masaru, Tokyo, 192-8537 (JP); Nihei, Masayoshi, Tokyo, 192-8537 (JP); Maki, Hideyuki, Kanagawa 223-8522 (JP)
(74) Representative: Lippert Stachow Patentanwälte Rechtsanwälte

(57) **Abstract**

An infrared microscope including a light source 10 that emits infrared light of which intensity increases and decreases repetitively, a collecting element 12 that collects the infrared light from the light source 10, an irradiating side objective element 22 that irradiates the sample with infrared light, a collecting side objective element 26 that collects the infrared light transmitted through the sample, a spectroscopic portion 30 that spectrally processes the collected infrared light, a detector 40 of the infrared light; and a signal processing portion 50 that performs lock-in detection to a detection signal by using a reference signal that synchronizes with an intensity of the infrared light to acquire an infrared spectrum of the sample. The light source 10 has a light-emitting surface having a size of 0.1 µm or greater and 20 µm or less. Light-emitting surface's image is formed on the sample by the collecting element 12 and the irradiating side objective element 22.

## Description

### RELATED APPLICATION

This application claims the priority of Japanese Patent Application No. 2024-47168 filed on March 22, 2024, the disclosure of which is incorporated herein by reference in its entirety.

### TECHNICAL FIELD

The present invention relates to an infrared microscope, and particularly to improvement in spatial resolution thereof.

### BACKGROUND ART

As an apparatus for performing infrared spectroscopy on a microregion of a sample, a Fourier transform infrared microscope is known. For example, in an infrared microscope disclosed in Patent Literature 1, infrared light from a light source is turned into an interference wave by an interferometer, and then forms a spot on a microregion of a sample by a Cassegrain mirror disposed above the sample. After the infrared light that is reflected from the microregion is collected by the same Cassegrain mirror, only the infrared light reflected from the measurement portion passes through a microscopic aperture to be detected by a detector. A signal processing portion such as a computer performs Fourier transform on a detection signal from the detector to acquire an absorption spectrum of the measurement portion.

### PRIOR ART

Patent Literature 1: Japanese Unexamined Patent Application Publication No. 2009-103814 A
Patent Literature 2: International Patent Publication No. WO2019/176705 A

### OBJECT AND SUMMARY OF INVENTION

In recent years, there has been a demand for infrared microscopes to be able to measure absorption spectra of even smaller microregions, that is, to have a higher spatial resolution.

Rayleigh criterion is a representative idea of spatial resolution. According to this criterion, diffraction-limited spatial resolution (Δd) is defined by the equation of Δd = 1.22λ / 2n sin θ. (Here, λ is a wavelength of infrared light, n is a refractive index of a medium between a sample and an objective mirror, and θ is a maximum angle relative to an optical axis of a ray of light from the objective mirror that enters the sample) However, since a light source that emits light with a wavelength range of about 2 to 15 µm and a size of several mm or greater is used in standard conventional infrared microscopes, its spatial resolution is said to be about 10 µm, and does not reach the diffraction limit. The object of the present invention is to provide an infrared microscope that enables measurement with spatial resolution higher than conventional spatial resolution.

### Solution to Problem

A black-body radiation light source such as a halogen lamp or a high luminance ceramic light source is used in conventional infrared light sources, and since the sizes of these light sources are large (several millimeters or greater), the infrared light that is transmitted through or reflected from the measurement sample is usually blocked with a mask to limit the spot region. The inventors considered that the spatial resolution in the infrared microscope cannot reach the diffraction limit of light because measurement accuracy significantly deteriorates when the region to be measured is smaller. Therefore, they focused on the point that a light-emitting surface of a light source using nanocarbon materials disclosed in Patent Literature 2 (referred to as a nanocarbon light source herein) has a size of micrometer order or less. That is, a smaller spot region of the infrared light can be formed on the sample when an image of the light source is formed directly on the sample by using such a micro nanocarbon light source. Of course, even if the size of the light-emitting surface of the nanocarbon light source is 1 µm, for example, an image of the same size cannot be formed on the sample due to limitation of diffraction of light; however, the image of the light source on the sample can be made closer to the size of the diffraction limit of light without using a mask, and spatial resolution close to the diffraction limit can be achieved without deteriorating measurement accuracy. On the other hand, the source light of the 1 µm light-emitting surface is extremely weak, and direct formation of the light source image at the position of the sample is largely affected by background radiation due to room temperature. For detecting selectively the source light from background radiation, there is a need for performing periodic increase/decrease of source light emission intensity, i.e., pulsed lighting.

That is, an infrared microscope according to the present invention comprises:
a light source (10) that emits infrared light of which intensity increases and decreases repetitively;
an irradiating side objective element (22) that irradiates a sample with the infrared light from the light source;
a sample disposing portion (24);
a collecting side objective element (26) that collects the infrared light that is transmitted through or reflected from the sample,
a spectroscopic portion (30) that spectrally processes the infrared light collected by the collecting side objective element;
a detector (40) that detects the infrared light that is spectrally processed; and
a signal processing portion (50) that performs lock-in detection on a detection signal from the detector by using a reference signal that synchronizes with an intensity of the infrared light to acquire an infrared spectrum of the sample,
wherein the light source (10) has a light-emitting surface having a size of 0.1 µm or greater and 20 µm or less, and
a light source side collecting element (12) that collects the infrared light is provided at an exit of the light source (10), and an image of the light-emitting surface of the light source (10) is formed on the sample through the light source side collecting element (12) and the irradiating side objective element (22).

Herein, the light source (10) indicates a light source for high spatial resolution measurement to be described later.

According to the configuration of the infrared microscope of the present invention, the infrared microscope comprises the light source (10) having the light-emitting surface of "0.1 µm or greater and 20 µm or less", the light source side collecting element (12) that collects the infrared light from the light source, and the irradiating side objective element (22) that irradiates a sample with the infrared light. Extremely weak infrared light from the micro light-emitting surface of the light source (10) is effectively collected by the light source side collecting element (12), and the measurement region on the sample is irradiated with the extremely weak infrared light with high accuracy by the light source side collecting element (12) and the irradiating side objective element (22). A formed image (spot region) of the micro light-emitting surface can be made closer to the size of the diffraction limit of light in this way.

Moreover, the spectroscopic portion (30) is disposed not at the exit of the light source, but behind the sample, and performs post-spectral processing on the transmitted light or the reflected light of the sample, so that the image of the light source is formed directly on the sample without passing through the spectroscopic portion (30); therefore, entry of stray light into the spot region of the sample can be suppressed.

As a result, the infrared microscope of the present invention can perform measurement with less stray light and an extremely high spatial resolution close to the diffraction limit.

Moreover, the infrared microscope according to the present invention comprises:
a microscopic measurement portion (20) that performs transmission or reflection measurement of a microregion of a sample by infrared light for high spatial resolution measurement or infrared light for low spatial resolution measurement; an optical path switching portion (60) that switches an optical path for high spatial resolution measurement (61) and an optical path for low spatial resolution measurement (62); and a spectroscopic portion (30) that is connected to the microscopic measurement portion via the optical path switching portion,
wherein the microscopic measurement portion (20) is connected to a light source for high spatial resolution measurement (10) that supplies the infrared light for high spatial resolution measurement to the microscopic measurement portion, and a detector for low spatial resolution measurement (70) that detects the infrared light for low spatial resolution measurement that is transmitted through or reflected from the microregion of the sample in the microscopic measurement portion,
the spectroscopic portion (30) is provided to be capable of spectrally processing the infrared light for high spatial resolution measurement that is transmitted through or reflected from the microregion of the sample in the microscopic measurement portion (20) and the infrared light for low spatial resolution measurement from a light source for low spatial resolution measurement (80) connected to the spectroscopic portion,
the optical path for high spatial resolution measurement (61) is configured such that, after the infrared light for high spatial resolution measurement from the light source for high spatial resolution measurement (10) is transmitted through or is reflected from the microregion of the sample in the microscopic measurement portion (20), it guides the infrared light to the spectroscopic portion (30) and guides the infrared light for high spatial resolution measurement spectrally processed by the spectroscopic portion (30) to a detector for high spatial resolution measurement (40) connected to the optical path switching portion (60),
the optical path for low spatial resolution measurement (62) is configured such that, after the infrared light for low spatial resolution measurement from the light source for low spatial resolution measurement (80) is spectrally processed in the spectroscopic portion (30), it guides the infrared light to the microscopic measurement portion (20), and the infrared light for low spatial resolution measurement is transmitted through or is reflected from the microregion of the sample in the microscopic measurement portion (20) to be detected by the detector for low spatial resolution measurement (70).

As described above, the infrared light for high spatial resolution measurement travels an optical path in which the sample is irradiated directly and then the infrared light for high spatial resolution measurement is subjected to post-spectral processing in the order of "10, 20, 61, 30, 40" along the optical path for high spatial resolution measurement (61). On the other hand, the infrared light for low spatial resolution measurement travels an optical path in which the infrared light for low spatial resolution measurement is subjected to pre-spectral processing and then the sample is irradiated in the order of "80, 30, 62, 20, 70" along the optical path for low spatial resolution measurement (62).

According to the configuration of the infrared microscope as described above, one infrared microscope comprises both the light source for high spatial resolution measurement (10) and the light source for low spatial resolution measurement (80), both the detector for high spatial resolution measurement (40) and the detector for low spatial resolution measurement (70), and the optical path switching portion (60) between the microscopic measurement portion (20) and the spectroscopic portion (30), so that the optical path for high spatial resolution measurement (61) and the optical path for low spatial resolution measurement (62) can be switched suitably, and both high spatial resolution measurement and low spatial resolution measurement can be performed selectively. Accordingly, the user can select a suitable one from analysis of a relatively large measurement region by low spatial resolution measurement and analysis of a microregion by high spatial resolution measurement depending on the size of the sample, i.e., the size of the demanded measurement range, and switch to measurement at different spatial resolution while the sample is disposed in the sample disposing portion.

Moreover, for example, measurement by an existing infrared microscope can be performed in low spatial resolution measurement, and measurement by the infrared microscope using the light source having the micro light-emitting surface as described above can be performed in high spatial resolution measurement; therefore, a microscopic optical system for high spatial resolution measurement close to the diffraction limit of light and an existing microscopic optical system can be achieved simultaneously.

The microscopic measurement portion (20) preferably has the irradiating side objective element (22) that forms a spot of the infrared light in the microregion on the sample, the sample disposing portion (24), and the collecting side objective element (26) that collects the infrared light that is transmitted through or reflected from the microregion of the sample.

The light source for high spatial resolution measurement (10) preferably has the light-emitting surface having a size of 0.1 µm or greater and 20 µm or less, and the light source side collecting element (12) that collects the infrared light is preferably provided at the exit of the light source for high spatial resolution measurement (10). An image of the light-emitting surface of the light source for high spatial resolution measurement (10) is preferably formed on the sample by the light source side collecting element (12) and the irradiating side objective element (22).

A microscopic aperture (21) is preferably placed between the light source for high spatial resolution measurement (10) and the irradiating side objective element (22) to block the infrared light from the light source for high spatial resolution measurement (10), so that the size of the image of the light-emitting surface formed on the sample is preferably changed.

When performing on transmission measurement, the microscopic measurement portion (20) is preferably configured to:
guide the infrared light for high spatial resolution measurement in the order of the irradiating side objective element (22), the sample disposing portion (24), and the collecting side objective element (26); and
guide the infrared light for low spatial resolution measurement in the order of the collecting side objective element (26), the sample disposing portion (24), and the irradiating side objective element (22).

The microscopic aperture (21) is preferably provided between the light source (10) and the irradiating side objective element (22) to block the infrared light from the light source (10), so that the size of the image of the light-emitting surface formed on the sample is preferably changed.

The light source side collecting element (12) and the irradiating side objective element (22) is preferably configured as Cassegrain mirrors, respectively.

The irradiating side objective element (22) is preferably a Cassegrain mirror that also functions as the collecting side objective element (26) that collects the infrared light that is reflected from the sample.

The irradiating side objective element (22) may be a Cassegrain mirror that also functions as the collecting side objective element (26) that collects the infrared light that is reflected from the sample, and the Cassegrain mirror may have an ATR crystal (28) for total reflection measurement.

The spectroscopic portion (30) may comprise an interferometer (32) that forms an interference wave of the infrared light, or may comprise a diffraction prism or a diffraction grating. In the case of the interferometer (32), the signal processing portion (50) performs Fourier transform processing after lock-in detection.

### BRIEF DESCRIPTION OF DRAWINGS

Figure 1 is a diagram showing an entire configuration of an infrared microscope according to a first embodiment of the present invention.
Figure 2 is a diagram showing a microscopic optical system for high spatial resolution measurement in the infrared microscope.
Figure 3 is a diagram showing a microscopic optical system for low spatial resolution measurement in the infrared microscope.
Figure 4 is a diagram showing variations of configurations of a microscopic measurement portion in the infrared microscope.
Figure 5 is a diagram showing an entire configuration of an infrared microscope according to a second embodiment of the present invention.
Figure 6 is a diagram showing an entire configuration of an infrared microscope according to a third embodiment of the present invention.

### BEST MODE FOR CARRYING OUT THE INVENTION

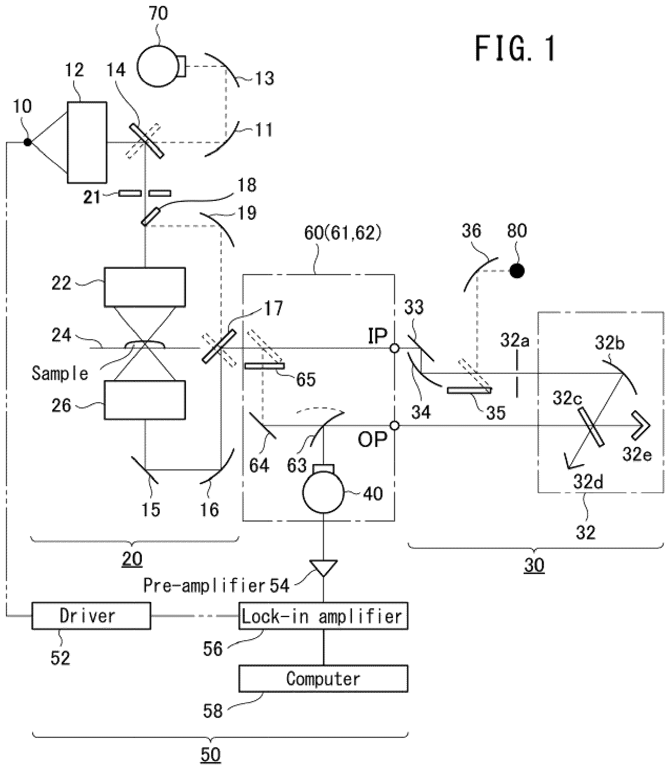

In the following, embodiments of the infrared microscope according to the present invention are described with reference to the drawings. Figure 1 shows a diagram of an entire configuration of an infrared microscope of a first embodiment.

The infrared microscope is capable of selectively switching both microscopic optical systems for high spatial resolution measurement and low spatial resolution measurement, and is configured with three sections: a microscopic measurement portion 20, an optical path switching portion 60, and a spectroscopic portion 30.

The microscopic measurement portion 20 is a portion that performs transmission or reflection measurement of a microregion of a sample by infrared light for high spatial resolution measurement or low spatial resolution measurement. The optical path switching portion 60 is configured to be capable of switching an optical path for high spatial resolution measurement 61 and an optical path for low spatial resolution measurement 62. The spectroscopic portion 30 is a portion that spectrally processes the infrared light for high spatial resolution measurement and low spatial resolution measurement, and is connected to the microscopic measurement portion 20 via the optical path switching portion 60.

Each portion is described in detail.

### <Microscopic measurement portion>

The microscopic measurement portion 20 comprises a nanocarbon light source 10 that emits infrared light for high spatial resolution measurement, a light source side Cassegrain mirror 12 (corresponds to a light source side collecting element) that collects the infrared light at an exit of the nanocarbon light source 10, an irradiating side Cassegrain mirror 22 (corresponds to an irradiating side objective element) that forms a spot of the collected infrared light on a sample, a sample disposing portion 24 where the sample is disposed, a collecting side Cassegrain mirror 26 (corresponds to a collecting side objective element) that collects transmission light of the sample, various reflection mirrors for forming an optical path, and a mid-band MCT detector 70 used for low spatial resolution measurement.

The nanocarbon light source 10 has a light-emitting surface having a size of about 1 µm square formed from a nanocarbon material as a light emission material on a substrate surface, and emits infrared light of which intensity increases and decreases repetitively from its light-emitting surface. For example, one that emits pulsed light with a periodic change in intensity of 100 Hz or greater is preferably used, more preferably 1000 Hz or greater. The size of the light-emitting surface is preferably 0.1 µm or greater and 20 µm or less, more preferably 1 µm or greater and 5 µm or less. Moreover, the size of the light-emitting surface is preferably a measurement wavelength or less of the infrared microscope. The size of the light-emitting surface is the diameter when it is a circular shape, the length of a side when it is a square, and the length of a longitudinal side when it is a rectangle, for example.

The light source side Cassegrain mirror 12 is provided at a position near the micro light-emitting surface of the nanocarbon light source 10, and collects the infrared light for high spatial resolution measurement from the light-emitting surface effectively.

The switching mirror 14 is at a position above the sample, and reflects the infrared light that travels in a horizontal direction from the light source side Cassegrain mirror 12 in a downward direction. Moreover, the switching mirror 14 is provided to be capable of changing the angle of a reflection surface, and, in low spatial resolution measurement, it reflects the infrared light for low spatial resolution measurement that comes from the lower side in a horizontal direction opposite the light source side Cassegrain mirror 12 and guides the infrared light for low spatial resolution measurement to the mid-band MCT detector 70 via two parabolic mirrors 11, 13. As described above, the switching mirror 14 can select either the nanocarbon light source 10 or the mid-band MCT detector 70 with respect to the microscopic measurement portion 20.

The irradiating side Cassegrain mirror 22 and the collecting side Cassegrain mirror 26 are disposed symmetrically above and below the sample of the sample disposing portion 24.

### ·Transmission/reflection measurement using infrared light for high spatial resolution measurement

In transmission measurement, the irradiating side Cassegrain mirror 22 forms a spot of the infrared light from the upper side on a microregion of the sample, and the collecting side Cassegrain mirror 26 collects the infrared light that is transmitted through the spot region. The collected infrared light is sequentially reflected from a plane mirror 15 at a lower side, a parabolic mirror 16, and a transmission/reflection switching mirror 17, and is guided to the optical path switching portion 60.

**In** reflection measurement, the irradiating side Cassegrain mirror 22 has a function of forming a spot of the infrared light on the microregion of the sample, and a function of the collecting side Cassegrain mirror to collect the infrared light that is reflected from the spot region. The infrared light collected by the irradiating side Cassegrain mirror 22 is sequentially reflected from a plane mirror 18 at an upper side, a parabolic mirror 19, and the transmission/reflection switching mirror 17, and is guided to the optical path switching portion 60.

The transmission/reflection switching mirror 17 has a structure similar to the switching mirror 14. It is provided to be capable of turning the plane mirror having a reflection surface on each surface by 90 degrees, and it can select either the infrared light from the parabolic mirror 16 at the lower side or the infrared light from the parabolic mirror 19 at the upper side to reflect in the direction to the optical path switching portion 60.

### ·Transmission/reflection measurement using infrared light for low spatial resolution measurement

**In** low spatial resolution measurement, the infrared light for low spatial resolution measurement is supplied from the optical path switching portion 60 to the microscopic measurement portion 20, so that the infrared light travels along an optical path in a direction opposite to the above-described high spatial resolution measurement. That is, in transmission measurement, the infrared light from the optical path switching portion 60 sequentially is reflected from the transmission/reflection switching mirror 17 (facing downwards), the parabolic mirror 16, and the plane mirror 15, and enters the collecting side Cassegrain mirror 26 from the lower side so that the sample is irradiated. The transmitted light of the sample is collected by the irradiating side Cassegrain mirror 22, and is reflected from the switching mirror 14 at the upper side to be guided to the mid-band MCT detector 70.

In reflection measurement, the infrared light from the optical path switching portion 60 sequentially is reflected from the transmission/reflection switching mirror 17 (facing upwards), the parabolic mirror 19, and the plane mirror 18, and enters the irradiating side Cassegrain mirror 22 from the upper side so that the sample is irradiated. The reflected light of the sample is collected by the irradiating side Cassegrain mirror 22, and is reflected from the switching mirror 14 at the upper side to be guided to the mid-band MCT detector 70.

Cassegrain mirrors having magnification between about 8x and 32x are used in infrared microscopes. In the present embodiment, Cassegrain mirrors having the same magnification are preferably used so that the total magnification of the light source side Cassegrain mirror 12 at the exit of the nanocarbon light source 10 and the irradiating side Cassegrain mirror 22 in front of the sample is set to 1x. The total magnification of these Cassegrain mirrors 12, 22 is preferably selected within the range of 0.5x to 2x, and it is more preferably 1x. Magnifications of each Cassegrain mirror is preferably selected within the range of 8x to 64x, more preferably the range of 15x to 32x.

The plane mirror 18 is disposed on a cross-sectional plane orthogonal to the optical axis that connects the switching mirror 14 and the irradiating side Cassegrain mirror 22, and on half of the region that is divided by a boundary line passing through the optical axis. Since it is not disposed on the other half of the region, it is called a half mirror in that sense. That is, the infrared light that travels from the switching mirror 14 to the irradiating side Cassegrain mirror 22 passes through a space where the half mirror is not disposed, and enters the irradiating side Cassegrain mirror 22. On the other hand, the infrared light that is reflected from the sample and is collected by the irradiating side Cassegrain mirror 22 travels in a direction toward the region where the half mirror is disposed, so that the infrared light is reflected from the half mirror and travels in a direction toward the parabolic mirror 19. Instead of the plane mirror 18 that spatially divides the light as described above, a half mirror that divides the light in terms of intensity (e.g., one that transmits half of the intensity of the incident light and reflects the other half) may be used.

### <Spectroscopic portion>

The optical path switching portion 60 will be described later, and the spectroscopic portion 30 is described first.

The spectroscopic portion 30 comprises a Michelson interferometer 32, various reflection mirrors for forming an optical path, and a high-luminance ceramic light source 80 installed therein (or connected externally). The spectroscopic portion 30 has an input portion IP that allows the infrared light from outside to enter, and an output portion OP that outputs the infrared light after spectroscopic processing.

The infrared light for high spatial resolution measurement from the optical path switching portion 60 enters from the input portion IP, sequentially is reflected from a plane mirror 33 and a parabolic mirror 34, and is guided to an entrance aperture 32a of the Michelson interferometer 32. Moreover, a switching mirror 35 having a movable reflection surface is disposed between the parabolic mirror 34 and the entrance aperture 32a, and it is at a position where the reflection surface does not block the optical path in high spatial resolution measurement. In low spatial resolution measurement, the infrared light for low spatial resolution measurement from the high-luminance ceramic light source 80 is collected by an ellipsoidal mirror 36, and is reflected from the reflection surface of the switching mirror 35 and is guided along the optical path to the entrance aperture 32a. As described above, the switching mirror 35 can select either the infrared light for high spatial resolution measurement from the optical path switching portion 60 or the infrared light for low spatial resolution measurement from the high-luminance ceramic light source 80 and input either one to the Michelson interferometer 32, and the Michelson interferometer 32 spectrally processes the input infrared light.

An incident diameter of an opening of the entrance aperture 32a is selected depending on resolution of a spectrum to be measured. Therefore, the entrance aperture 32a can function in both high spatial resolution measurement and low spatial resolution measurement. In low spatial resolution measurement, the size of the microscopic aperture 21 at later stage or the size of an element surface of the MCT detector 70 functions similarly to the entrance aperture 32a, so that measurement can be performed without using the entrance aperture 32a in the range of spectral resolution commonly used in usual microscopic measurement. Moreover, in high spatial resolution measurement, since the size of the light source itself is micro, the same effect as the limitation imposed by the entrance aperture 32a can be achieved; therefore, measurement can be performed without using the entrance aperture 32a.

The Michelson interferometer 32 comprises the entrance aperture 32a that limits an incident angle of incident light, a collimator mirror 32b that collects the infrared light from the entrance aperture 32a to collimate the infrared light, a beam splitter 32c that divides the parallel light into two light fluxes, a fixed mirror 32d that reflects one of the divided light flux at a fixed position, and a moving mirror 32e that reflects the other divided light flux while changing the distance from the beam splitter 32c. The reflected light fluxes from the fixed mirror 32d and the moving mirror 32e are synthesized again at the beam splitter 32c, forms an interference wave of the infrared light depending on the optical path difference of the two divided light fluxes, and it is output from the output portion OP of the spectroscopic portion 30.

### <Optical path switching portion>

The optical path switching portion 60 comprises various reflection mirrors for forming an optical path for high spatial resolution measurement 61 and an optical path for low spatial resolution measurement 62, and a narrowband MCT detector 40 for high spatial resolution measurement having high speed responsiveness.

A switching mirror 63 having a movable parabolic surface is disposed on the optical path of the infrared light from the output portion OP of the above-described spectroscopic portion 30. In high spatial resolution measurement, the infrared light for high spatial resolution measurement from the spectroscopic portion 30 is collected by the parabolic surface of the switching mirror 63 on the optical path, and is detected by the narrowband MCT detector 40. In low spatial resolution measurement, the parabolic surface of the switching mirror 63 is at a position where it does not block the optical path, so that the infrared light for low spatial resolution measurement passes through the switching mirror 63, is reflected from a plane mirror 64, and is guided to a switching mirror 65 on the optical path of the infrared light for high spatial resolution measurement from the microscopic measurement portion 20.

The switching mirror 65 has a movable reflection surface, and is at a position where the reflection surface does not block the optical path in high spatial resolution measurement. The infrared light for high spatial resolution measurement from the microscopic measurement portion 20 passes through the switching mirror 65, and travels in a straight line to the input portion IP of the spectroscopic portion 30. In low spatial resolution measurement, the reflection surface of the switching mirror 65 is positioned in the optical path, and the infrared light for low spatial resolution measurement from the plane mirror 64 is reflected from the reflection surface, and is guided to the microscopic measurement portion 20.

The optical path switching portion 60 can form the optical path for high spatial resolution measurement 61 by positioning the two switching mirrors 63, 65 on the high spatial resolution side, and on the other hand, it can form the optical path for low spatial resolution measurement 62 by positioning the two switching mirrors 63, 65 on the low spatial resolution side. That is, the optical path switching portion 60 can selectively switch the optical path that connects the microscopic measurement portion 20 and the spectroscopic portion 30 to either the optical path for high spatial resolution measurement 61 or the optical path for low spatial resolution measurement 62.

In the present embodiment, a plurality of switching mirrors (14, 17, 35, 63, 65) are used. Each of them is actuated by an electric actuator or the like, and is automatically controlled by a drive control unit in the infrared microscope.

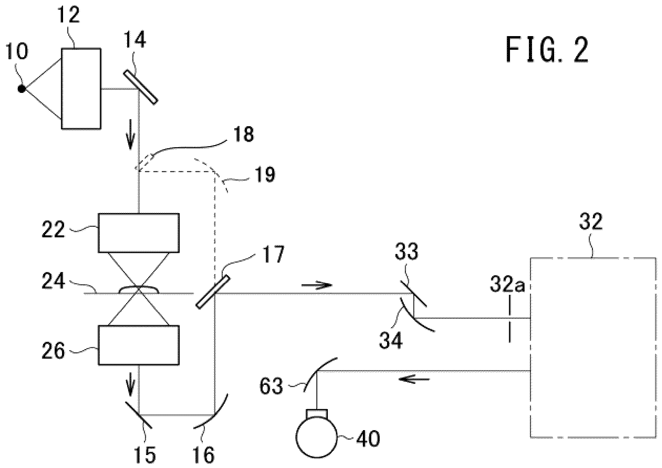

Figure 2 shows the microscopic optical system for high spatial resolution measurement upon transmission measurement in a simpler form than Figure 1. The infrared light for high spatial resolution measurement travels, along the optical path for high spatial resolution measurement 61, in the order of: the nanocarbon light source 10, the switching mirror (high spatial resolution side) 14, the irradiating side Cassegrain mirror 22, the sample, the collecting side Cassegrain mirror 26, the plane mirror 15, the parabolic mirror 16, the switching mirror (transmission side) 17, the plane mirror 33, the parabolic mirror 34, the Michelson interferometer 32, the switching mirror (high spatial resolution side) 63, and the narrowband MCT detector 40. In this microscopic optical system, after the sample is irradiated directly with the extremely weak infrared light from the nanocarbon light source 10 at the microscopic measurement portion 20, the extremely weak infrared light that is transmitted through the sample is subjected to post-spectroscopic processing at the spectroscopic portion 30.

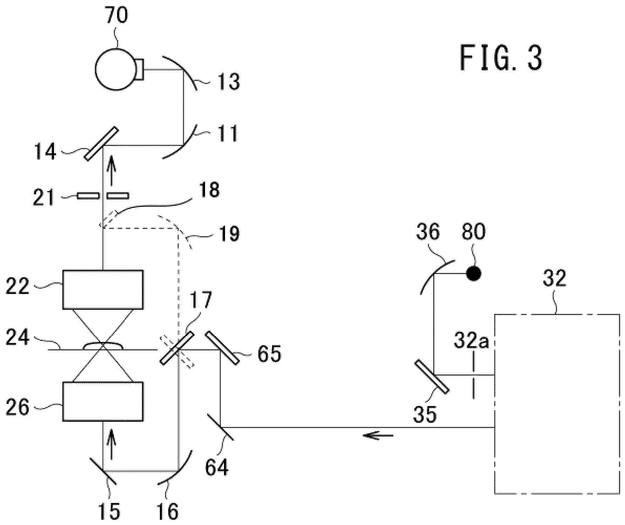

Figure 3 shows the microscopic optical system for low spatial resolution measurement for transmission measurement similar to Figure 2. The infrared light for low spatial resolution measurement travels, along the optical path for low spatial resolution measurement 62, in the order of: the high-luminance ceramic light source 80, the ellipsoidal mirror 36, the switching mirror (low spatial resolution side) 35, the Michelson interferometer 32, the plane mirror 64, the switching mirror (low spatial resolution side) 65, the switching mirror (transmission side) 17, the parabolic mirror 16, the plane mirror 15, the collecting side Cassegrain mirror 26, the sample, the irradiating side Cassegrain mirror 22, the microscopic aperture 21, the switching mirror (low spatial resolution side) 14, the parabolic mirror 11, the parabolic mirror 13, and the mid-band MCT detector 70. In this microscopic optical system, after macro infrared light having a size of the cross-section of the light flux of several millimeters from the high-luminance ceramic light source 80 is subjected to pre-spectroscopic processing at the spectroscopic portion 30, the sample is irradiated at the microscopic measurement portion 20.

In Figure 3, although the microscopic aperture 21 is shown between the switching mirror 14 and the plane mirror (half mirror) 18, this microscopic aperture 21 is also placed in the optical path in high spatial resolution measurement. The size of the opening of the microscopic aperture 21 depends on the macro infrared light used for low spatial resolution measurement, and therefore the microscopic aperture 21 functions as an aperture that adjusts spatial resolution for the macro infrared light; however, in high spatial resolution measurement, the size of the light source 10 is the same as the size of irradiation spot to the sample, so that the function of the aperture is unnecessary. Although the microscopic aperture 21 is omitted in the microscopic optical system of Figure 2, the microscopic aperture 21 may be used for adjusting the size of irradiation spot in the light source 10 having a size of 0.5 µm or greater. For example, a plurality of microscopic apertures 21 having openings of different sizes or the microscopic aperture 21 that can change the size of the opening may be used to provide a mechanism that can variably select the size of the image of the light-emitting surface formed on the sample.

As shown in Figure 1, the configuration of the signal processing portion 50 in high spatial resolution measurement comprises: a light source driver 52 that makes the nanocarbon light source 10 emit pulsed light at a frequency of 3 kHz, for example; a pre-amplifier 54 that amplifies a detection signal from the narrowband MCT detector 40; a lock-in amplifier 56 that uses a frequency signal of the nanocarbon light source 10 as a reference signal and detects a signal that synchronizes with the reference signal from the detection signal from the pre-amplifier 54; and a computer 58 that performs Fourier transform on the signal that is detected by lock-in detection to calculate absorbance spectrum information. Therefore, in high spatial resolution measurement, double modulation photometry can be performed by emission of pulsed light at the nanocarbon light source 10 and post-spectroscopic processing at the Michelson interferometer 32.

On the other hand, in low spatial resolution measurement, the sample is irradiated with the infrared light having a constant intensity from the high-luminance ceramic light source 80 after the infrared light is turned into an interference wave at the Michelson interferometer 32, so that modulation photometry by the interference wave is performed.

The effects of the infrared microscope of the present embodiment are described.
(1) In high spatial resolution measurement, the Cassegrain mirrors 12, 22 are disposed between the nanocarbon light source 10 and the sample, so that extremely weak infrared light from a micro light-emitting surface is effectively collected at a high NA (numerical aperture) and the sample is irradiated. Moreover, by the coaxial optical system irradiation of the Cassegrain mirrors 12, 22, an image of the micro light-emitting surface is imaged on the sample one-to-one. Since a light source image is formed on the sample without passing through an off-axial aspherical (parabolic, ellipsoidal) mirror in the coaxial optical system irradiation, distortion of the light source image is reduced remarkably, and measurement with low stray light can be achieved. In the present embodiment, the Michelson interferometer 32 is disposed behind the sample, and performs post-spectroscopic processing on the transmitted light or the reflected light of the sample. Accordingly, the image of the nanocarbon light source 10 is directly formed on the sample without passing through the Michelson interferometer 32, so that it is not affected by aberration of aspheric mirrors of the Michelson interferometer, and entry of stray light into the spot region of the sample is suppressed; therefore, low stray-light measurement is possible.
   As described above, in high spatial resolution measurement, a light source having a size that is sufficiently small such as 1/3 to 1/10 of the measurement wavelength is used, so that the image of the micro light-emitting surface formed on the sample can be made into a size close to the diffraction limit of light.
(2) In general, the infrared microscope requires high sensitivity measurement since it uses weak infrared light; therefore, the sample needs to be irradiated with infrared light of which intensity changes periodically. Since the heat capacity which depends on size is large in the infrared light source of a conventional infrared microscope, it is not suitable for high-speed flashing. Therefore, the sample was irradiated with the interference wave of the infrared light formed by the Michelson interferometer (pre-spectroscopic processing).

On the other hand, the nanocarbon light source 10 has a luminous body that is small in volume, shows high followability to on/off operation of light, and can emit pulsed light in a high frequency. Therefore, in high spatial resolution measurement with the infrared microscope of the present embodiment, the detection signal of the extremely weak infrared light from the narrowband MCT detector 40 is detected by lock-in detection as the reference signal that synchronizes with the frequency signal of the light source 10, so that a high sensitivity measurement can be performed (e.g., separation from background radiation light at room temperature) even with post-spectroscopic processing.

As a result, the infrared microscope of the present invention can perform measurement with low stray light and an extremely high spatial resolution close to the diffraction limit in high spatial resolution measurement.

(3) Moreover, according to the configuration of the infrared microscope of the present embodiment, the optical path for high spatial resolution measurement 61 and the optical path for low spatial resolution measurement 62 can be suitably switched, and both high spatial resolution measurement and low spatial resolution measurement (e.g., measurement by existing infrared microscopes) can be performed selectively. Accordingly, the user can select a suitable one from analysis of a relatively large measurement region by low spatial resolution measurement or analysis of a microregion by high spatial resolution measurement according to the size of the sample, i.e., the size of the desired measurement region, and can switch to measurement of different spatial resolution while the sample is disposed on the sample disposing portion 24.

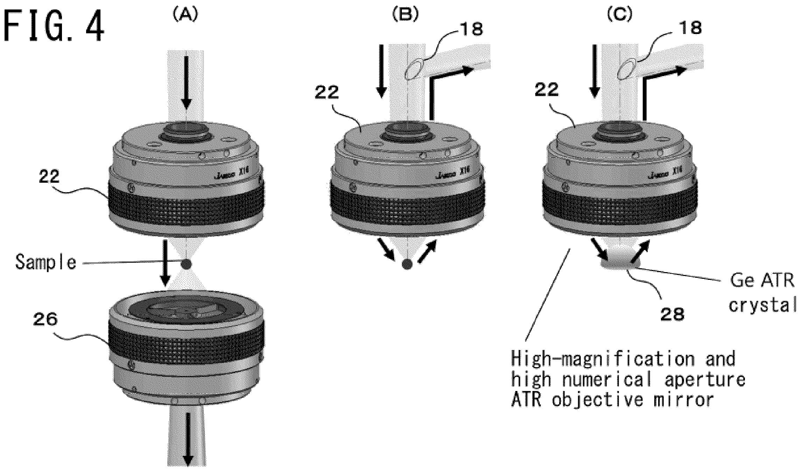

(4) Moreover, as shown in Figure 4, high spatial resolution measurement can be performed with the microscopic measurement portion 20 suitably selected from three measurement modes (transmission, reflection, and total reflection). In transmission measurement mode of Figure 4 (A), Cassegrain mirrors 22, 26 disposed in vertically symmetric positions with respect to the sample are used. In reflection measurement mode of Figure 4 (B), the Cassegrain mirror 22 at the upper side of the sample is used. In total reflection measurement mode of Figure 4 (C), a high magnification and high numerical aperture Cassegrain mirror 22 having an ATR crystal 28 for total reflection measurement is used.

(5) For example, when a sample interposed with window plates having a high refractive index is measured, irradiation with the infrared source light of a macro size of the sample tends to be affected easily by stray light caused by multiple reflection between the two window plates. On the contrary, in high spatial resolution measurement in which the irradiation size of the source light and the size of the measurement spot on the sample are the same, influence of stray light due to multiple reflection can be suppressed since the spot region on the sample is extremely small.

(6) The nanocarbon light source 10 is not too close to the sample, and there is no risk of the sample being damaged by light and heat from the nanocarbon light source 10.

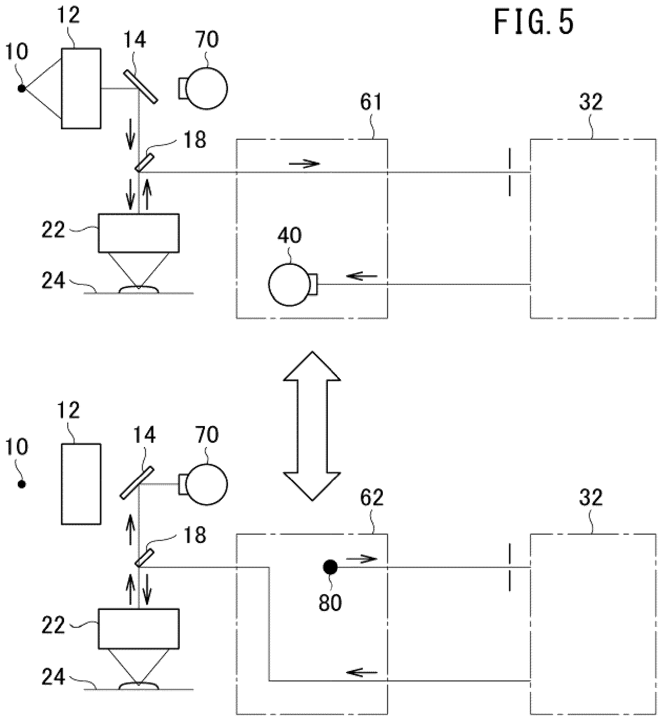

Figure 5 shows a configuration of an infrared microscope according to a second embodiment of the present invention, and shows a configuration of an infrared microscope dedicated to reflection measurement in a simplified form. The upper side of Figure 5 is an optical system for high spatial resolution measurement, and the lower side is an optical system for low spatial resolution measurement. The high-luminance ceramic light source 80 is incorporated into the optical path for low spatial resolution measurement 62.

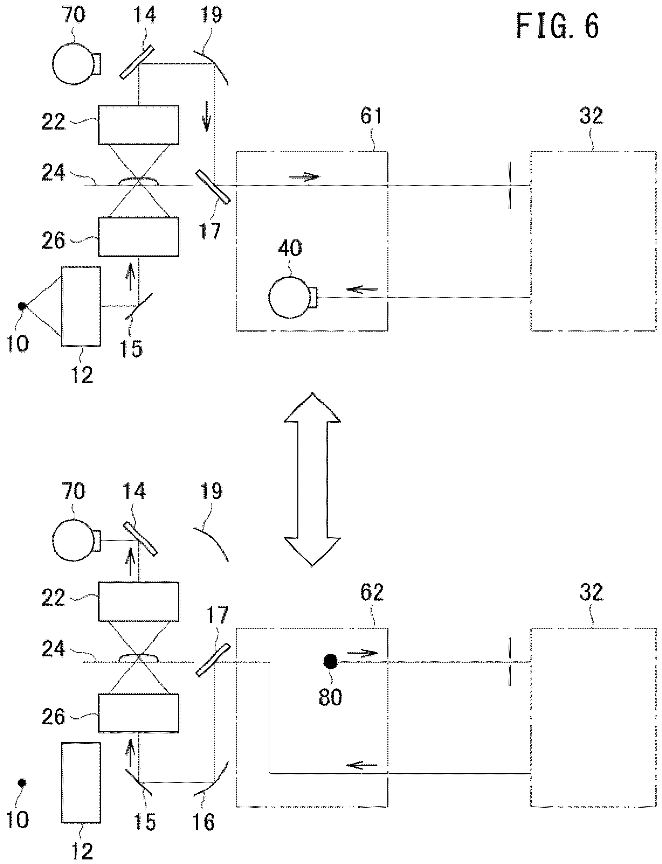

Figure 6 shows a configuration of an infrared microscope according to a third embodiment of the present invention, and shows a configuration of an infrared microscope dedicated to transmission measurement in a simplified form. The upper side of Figure 6 is an optical system for high spatial resolution measurement, and the lower side is an optical system for low spatial resolution measurement. Like Figure 5, the high-luminance ceramic light source 80 is incorporated into the optical path for low spatial resolution measurement 62. In addition, in the infrared microscope of Figure 6, it is configured such that the sample is irradiated from a lower side with extremely weak infrared light from the nanocarbon light source 10 in high spatial resolution measurement, and the sample is irradiated from a lower side with the infrared light from the Michelson interferometer 32 in low spatial resolution measurement.

Examples of representative combinations of the light source and the detector in two spatial resolution measurements are shown. The use of the detector is not limited to the detectors described herein, and any detector that can satisfy the sensitivity and frequency response requirements in the measurement wavelength (wave number) range can be used.

<For high spatial resolution measurement >
Nanocarbon light source
Narrowband MCT detector (wavenumber region: 5000 to 750 cm⁻¹, wavelength region: 2.0 to 13.3 µm)

<For low spatial resolution measurement >
High-luminance ceramic light source (or halogen lamp)
Mid-band MCT detector (wavenumber region: 7800 to 600 cm⁻¹, wavelength region: 1.3 to 16.7 µm)

In the above-described embodiments, cases in which the spectroscopic portion 30 comprises the Michelson interferometer 32 that forms the interference wave of the infrared light are described; however, the spectroscopic portion 30 may comprise a dispersing type prism or a diffraction grating and output chromatically dispersed infrared light. In this case, the signal processing portion 50 performs lock-in detection and detects a detection signal of each dispersed wavelength to acquire an absorption spectrum.

In the above-described embodiments, Cassegrain mirrors 12, 22, 26 are used in the microscopic measurement portion 20; however, an objective lens can be used instead of the Cassegrain mirror. In general, however, visible light for observation of the sample is often introduced in infrared microscopes, since there is hardly any lens of good quality and low cost that transmits both visible light for observation and infrared light for measurement, and problems of chromatic aberration tend to occur easily when broad infrared wavelength band is used in lenses, Cassegrain mirrors of reflective-type collection system are preferred in infrared microscopes.

### REFERENCE SIGNS LIST

10 Nanocarbon light source (light source for high spatial resolution measurement)
12 Light source side Cassegrain mirror (light source side collecting element)
20 Microscopic measurement portion
22 Irradiating side Cassegrain mirror (irradiating side objective element)
24 Sample disposing portion
26 Collecting side Cassegrain mirror (collecting side objective element)
28 ATR crystal
30 Spectroscopic portion
32 Michelson interferometer
40 Narrowband MCT detector (detector for high spatial resolution measurement)
50 Signal processing portion
60 Optical path switching portion
61 Optical path for high spatial resolution measurement
62 Optical path for low spatial resolution measurement
70 Mid-band MCT detector (detector for low spatial resolution measurement)
80 High-luminance ceramic light source (light source for low spatial resolution measurement)

## Claims

1. An infrared microscope comprising:
a light source that emits infrared light of which intensity increases and decreases repetitively;
an irradiating side objective element that irradiates a sample with the infrared light from the light source;
a sample disposing portion;
a collecting side objective element that collects the infrared light that is transmitted through or reflected from the sample,
a spectroscopic portion that spectrally processes the infrared light collected by the collecting side objective element;
a detector that detects the infrared light that is spectrally processed; and
a signal processing portion that performs lock-in detection on a detection signal from the detector by using a reference signal that synchronizes with an intensity of the infrared light to acquire an infrared spectrum of the sample,
wherein the light source has a light-emitting surface having a size of 0.1 µm or greater and 20 µm or less, and
a light source side collecting element that collects the infrared light is provided at an exit of the light source, and an image of the light-emitting surface of the light source is formed on the sample through the light source side collecting element and the irradiating side objective element.

2. An infrared microscope comprising: a microscopic measurement portion that performs transmission or reflection measurement of a microregion of a sample by infrared light for high spatial resolution measurement or infrared light for low spatial resolution measurement; an optical path switching portion that switches an optical path for high spatial resolution measurement and an optical path for low spatial resolution measurement; and a spectroscopic portion that is connected to the microscopic measurement portion via the optical path switching portion,
wherein the microscopic measurement portion is connected to a light source for high spatial resolution measurement that supplies the infrared light for high spatial resolution measurement to the microscopic measurement portion and a detector for low spatial resolution measurement that detects the infrared light for low spatial resolution measurement that is transmitted through or reflected from the microregion of the sample in the microscopic measurement portion,
the spectroscopic portion is provided to be capable of spectrally processing the infrared light for high spatial resolution measurement that is transmitted through or reflected from the microregion of the sample in the microscopic measurement portion and the infrared light for low spatial resolution measurement from a light source for low spatial resolution measurement connected to the spectroscopic portion,
the optical path for high spatial resolution measurement is configured such that, after the infrared light for high spatial resolution measurement from the light source for high spatial resolution measurement is transmitted through or is reflected from the microregion of the sample in the microscopic measurement portion, it guides the infrared light to the spectroscopic portion and guides the infrared light for high spatial resolution measurement spectrally processed by the spectroscopic portion to a detector for high spatial resolution measurement connected to the optical path switching portion,
the optical path for low spatial resolution measurement is configured such that, after the infrared light for low spatial resolution measurement from the light source for low spatial resolution measurement is spectrally processed in the spectroscopic portion, it guides the infrared light to the microscopic measurement portion, and the infrared light for low spatial resolution measurement is transmitted through or is reflected from the microregion of the sample in the microscopic measurement portion to be detected by the detector for low spatial resolution measurement.

3. The infrared microscope of claim 2, wherein
the microscopic measurement portion has an irradiating side objective element that irradiates the microregion of the sample with the infrared light, a sample disposing portion, and a collecting side objective element that collects the infrared light that is transmitted through or reflected from the microregion of the sample.

4. The infrared microscope of claim 3, wherein
the light source for high spatial resolution measurement has a light-emitting surface having a size of 0.1 µm or greater and 20 µm or less, a light source side collecting element that collects the infrared light is provided at an exit of the light source for high spatial resolution measurement, and an image of the light-emitting surface of the light source for high spatial resolution measurement is formed on the sample by the light source side collecting element and the irradiating side objective element.

5. The infrared microscope of claim 3 or 4, wherein
a microscopic aperture is placed between the light source for high spatial resolution measurement and the irradiating side objective element, and
the infrared light from the light source for high spatial resolution measurement is blocked by the microscopic aperture to change the size of the image of the light-emitting surface formed on the sample.

6. The infrared microscope of claim 3 or 4, wherein,
upon performing on transmission measurement, the microscopic measurement portion is configured to:
guide the infrared light for high spatial resolution measurement in the order of: the irradiating side objective element, the sample disposing portion, and the collecting side objective element; and
guide the infrared light for low spatial resolution measurement in the order of: the collecting side objective element, the sample disposing portion, and the irradiating side objective element.

7. The infrared microscope of claim 1, wherein
a microscopic aperture is provided between the light source and the irradiating side objective element, and
the infrared light from the light source is blocked by the microscopic aperture to change the size of the image of the light-emitting surface formed on the sample.

8. The infrared microscope of claim 1 or 4, wherein
the light source side collecting element and the irradiating side objective element are configured as Cassegrain mirrors, respectively.

9. The infrared microscope of claim 1 or 3, wherein
the irradiating side objective element is a Cassegrain mirror that also functions as a collecting side objective element that collects the infrared light that is reflected from the sample.

10. The infrared microscope of claim 1 or 3, wherein
the irradiating side objective element is a Cassegrain mirror that also functions as a collecting side objective element that collects the infrared light that is reflected from the sample, and the Cassegrain mirror has an ATR crystal for total reflection measurement.
